Europäisches Patentamt

European Patent Office

Office européen des brevets

(11) Numéro de publication : **0 006 455**
**B1**

(12) # FASCICULE DE BREVET EUROPÉEN

(45) Date de publication du fascicule du brevet :
22.06.83

(51) Int. Cl.³ : **A 23 L 1/212**, A 23 P 1/00,
A 23 B 7/06

(21) Numéro de dépôt : **79101623.1**

(22) Date de dépôt : **28.05.79**

(54) **Procédé de préparation de légumes frits et produits à base de légumes frits.**

(30) Priorité : **13.06.78 CH 6423/78**

(43) Date de publication de la demande :
**09.01.80 Bulletin 80/01**

(45) Mention de la délivrance du brevet :
**22.06.83 Bulletin 83/25**

(84) Etats contractants désignés :
**BE DE FR GB IT NL**

(56) Documents cités :
**FR A 1 454 341**
**FR A 2 267 053**
**GB A 1 506 166**
**US A 2 474 650**
**US A 3 175 914**
**US A 3 578 463**
**US A 3 745 019**
**US A 3 751 268**
**US A 3 976 798**

(73) Titulaire : **PRODUITS FINDUS S.A.**
**Case postale 66**
**CH-1800 Vevey (CH)**

(72) Inventeur : **Bengtsson, Bengt L.**
**Astergatan 17**
**S-267 00 Bjuv (SE)**
Inventeur : **Fonskov, Jörgen**
**Baldersgatan 10**
**S-267 00 Bjuv (SE)**

(74) Mandataire : **Archambault, Jean**
**55, avenue Nestlé**
**CH-1800 Vevey (CH)**

EP 0 006 455 B1

Jouve, 18, rue St-Denis, 75001 Paris, France

Procédé de préparation de légumes frits

La présente invention concerne un procédé de préparation de légumes frits, notamment de légumes frits destinés à être surgelés.

Les pommes de terre frites, notamment à la française, sont fabriquées suivant des spécifications strictes pour la matière première utilisée et les conditions des différentes étapes de la fabrication. Pour obtenir un produit final de bonne qualité la matière première doit avoir une teneur élevée en matière sèche et une teneur faible en sucres réducteurs. Le procédé classique de fabrication de pommes de terre frites à la française est le suivant :

Les pommes de terre sont pelées, parées et coupées en bâtonnets. Les bâtonnets sont ensuite blanchis en une ou deux étapes à température spécifique, plongés dans une solution de glucose, frits dans l'huile, égouttés et enfin congelés.

Dans ce procédé classique la composition de la matière première est très importante. La teneur en matière sèche doit être supérieure à 20 %, car si cette teneur est trop faible, la durée de friture doit être augmentée de façon à obtenir la teneur en matière sèche désirée dans le produit final. L'augmentation de la durée de friture a pour conséquence un rendement plus faible et une teneur augmentée en matière grasse dans le produit final. De plus, si la matière première est stockée à température inférieure à + 7 °C, il y a une accumulation de sucres réducteurs. Une teneur élevée en sucres réducteurs conduit à un produit de couleur brune inadéquate après friture.

Dans le procédé classique, l'étape de friture doit durer 1,5 à 3 min. de façon à obtenir un produit acceptable. Une durée de friture plus courte conduit à une texture inacceptable. On aimerait cependant que la durée de friture soit courte pour diminuer l'absorption de graisse et obtenir un produit final à faible teneur en graisse.

Un désavantage des pommes de terre frites à la française fabriquées selon le procédé traditionnel est la détérioration rapide de la texture après décongélation du produit congelé. Immédiatement après décongélation (dans l'huile, dans la poêle, le four), le produit est bien croustillant et a une bonne texture mais il n'est pas stable. Après refroidissement, il devient mou et pâteux.

Des tentatives ont été faites pour améliorer la texture des pommes de terre frites à la française préparées selon le procédé traditionnel en recouvrant les bâtonnets de pommes de terre d'une couche d'un hydrocolloïde avant de les frire en grande friture. Dans un cas l'hydrocolloïde est un amidon de maïs non-gélatinisé non-modifié à haute teneur en amylose. Dans un second cas, l'utilisation d'un éther d'alkyl cellulose gélatinisé non-modifié ou modifié ou d'un amidon modifié ou encore d'un alginate est proposée. Dans un troisième cas, l'hydrocolloïde est un amidon de maïs gélatinisé à haute teneur en amylose, de l'amylose obtenu par fractionnement de l'amidon de pommes de terre ou encore de l'amylose modifié.

Un inconvénient de ces méthodes est cependant que les bâtonnets de pommes de terre sont toujours blanchis dans l'eau chaude ou dans une solution chaude de lactate de calcium avant d'être recouverts de la couche d'hydrocolloïde.

Dans la fabrication, l'étape de blanchiment est essentielle pour inactiver les enzymes. Si les enzymes ne sont pas inactivés, les réactions enzymatiques continuent dans le produit congelé, ce qui conduit à l'apparition de mauvais goût et à une détérioration de la texture. Pendant le blanchiment intervient un lessivage des solides du matériau traité vers les eaux de blanchiment. Ce lessivage diminue la saveur naturelle. Il diminue également la teneur en éléments nutritifs et spécialement en vitamines hydrosolubles, par exemple l'acide ascorbique. D'autre part, la présence des eaux de blanchiment est un problème sérieux car ces eaux ont une teneur élevée en matière organique et doivent être traitées en station d'épuration.

Jusqu'à présent, il n'a pas été possible d'appliquer le procédé traditionnel utilisé pour la fabrication des pommes de terre frites à la française à d'autres légumes-racine ou légumes-feuille ou fleur à cause de la basse teneur en matière sèche et/où la teneur élevée en sucres réducteurs de ces légumes. Pour obtenir un produit à texture croustillante, il est nécessaire d'utiliser une longue durée de friture, ce qui conduit à un faible rendement, une couleur brune inadéquate et une teneur en graisse excessive.

Nous avons trouvé qu'on peut préparer les pommes de terre frites à la française surgelées ainsi que d'autres légumes n'ayant pas les désavantages mentionnés préalablement. En particulier, on a obtenu une diminution des pertes en solides de valeur, en goût naturel et en vitamines ainsi qu'une augmentation notable du rendement. De plus, une amélioration substantielle de la texture et du goût est obtenue lors du réchauffement du produit congelé, cependant qu'un degré élevé du caractère croustillant et une coloration agréable sont maintenus durant un stockage prolongé.

Le présent procédé est caractérisé par le fait qu'on enrobe les morceaux de légumes, soit en une étape en appliquant une couche sèche d'un produit contenant de l'amidon, soit en deux étapes en traitant d'abord le produit par une pâte liquide et en appliquant ensuite une couche sèche d'un produit contenant de l'amidon, qu'on blanchit les morceaux enrobés à la vapeur et qu'on frit les morceaux enrobés et blanchis à grande friture, ledit produit contenant de l'amidon ayant la propriété d'adhérer aux légumes et d'absorber la vapeur d'eau qui se condense au cours du blanchiment.

Pour mettre en œuvre le procédé, les légumes sont pelés si nécessaire, parés, lavés et coupés en

# 0 006 455

bâtonnets ou morceaux ou bien encore laissés entiers selon les dimensions et formes qu'on désire obtenir. Les légumes qu'on peut traiter sont les pommes de terre, carottes, oignons, navets, rutabagas, céleris, panais, betteraves rouges, aubergines, courges, courgettes, choux-fleurs, choux de Bruxelles, champignons, etc. Les morceaux de légumes peuvent être fraîchement préparés ou à l'état congelé. Ils peuvent aussi être reconstitués, par exemple compressés et formés à partir de copeaux ou de morceaux disparates de légumes.

Les morceaux de légumes individuels sont alors enrobés avant d'être blanchis et ceci constitue le point clef du procédé.

L'opération d'enrobage peut être effectué en une ou deux étapes.

La manière la plus simple est d'appliquer une couche sèche de produit directement sur la surface humide des morceaux. La couche peut être appliquée au moyen d'un procédé continu et d'un appareillage à saupoudrer classique.

Le matériau constituant la couche peut être :
— de la farine de blé ou d'autres céréales,
— de la farine de soja ou d'autres graines oléagineuses,
— des amidons naturels ou modifiés d'origine variée,
— des granules, flocons ou fibres de pommes de terre ou d'autres sous-produits fibreux,
— des concentrés ou isolats de protéines d'origine diverse,
— des miettes de pain, de flocons de maïs,
— des agents stabilisants et épaississants, par exemple agars, alginates, celluloses, gélatines, gommes, pectines, etc...

Ces différents ingrédients peuvent être utilisés seuls ou en diverses combinaisons. La propriété la plus importante du revêtement est qu'il doit adhérer au produit et être capable d'absorber la vapeur qui se condense durant le blanchiment.

Il doit aussi absorber l'eau provenant de l'intérieur du produit. Le revêtement scelle efficacement la surface, ce qui permet d'éviter les pertes par égouttage. En vue d'obtenir une texture croustillante lors de l'étape de friture, il est essentiel que le revêtement soit capable de maintenir toute l'eau provenant de l'intérieur du produit et également de la condensation de la vapeur au cours du processus de friture. Ceci a un effet de colle qui est essentiel à l'obtention d'une texture croustillante.

De plus, la texture croustillante doit être maintenue après friture, surgélation et décongélation.

On préfère un matériau de revêtement à base d'un mélange d'amidon de pommes de terre et de farine de blé.

Les granules de pommes de terre représentent de préférence 50 à 90 % et la farine de blé 10 à 50 % en poids du revêtement quand celui-ci est basé sur ces deux ingrédients.

Les flocons de maïs donnent également de bons résultats lorsqu'ils sont combinés soit avec la farine soit avec un mélange de farine et d'amidon. Ainsi les granules de pommes de terre peuvent être entièrement ou partiellement remplacés par des flocons de maïs. Des exemples de mélanges donnant de bons résultats comprennent 50 % de miettes de flocons de maïs, 50 % de farine de blé et 20 % de miettes de flocons de maïs/50 % de farine de blé/30 % de granules de pommes de terre en poids.

De faibles quantités de sucres réducteurs peuvent être ajoutées aux ingrédients principaux du revêtement mentionné ci-dessus, en vue de contrôler la coloration du revêtement durant la friture. Si on le désire, du sel et des épices peuvent être également ajoutés.

Après avoir coupé les pommes de terre ou les légumes en morceaux, la matière montre une surface humide et une certaine quantité de revêtement sec adhère à cette surface humide. Si cette quantité de revêtement est trop faible, on peut plonger les morceaux dans une pâte liquide en vue d'augmenter l'épaisseur du revêtement. Dans ce cas, le revêtement est appliqué en deux étapes. Dans la première étape, le produit est traité dans une pate liquide à haute viscosité et ensuite recouvert par un revêtement sec comme décrit ci-dessus. L'enrobage en deux étapes est avantageux dans le cas de matières premières spéciales et il est nécessaire lorsque la matière première utilisée est encore au stade congelé, en vue de faciliter l'adhésion du revêtement.

L'épaisseur du revêtement influe sur l'aptitude du produit au stockage, Un produit ayant un revêtement de très faible épaisseur montrera une perte plus rapide de la texture croustillante durant le stockage à l'état congelé et ceci est dû au fait que seulement une faible proportion de l'humidité interne du produit a besoin de migrer de l'intérieur du produit vers le revêtement pour que la teneur en eau du revêtement soit en équilibre avec celle du reste du produit.

Inversement, un produit ayant un revêtement épais n'est pas désirable du point de vue des qualités organoleptiques, car le revêtement domine sur la partie légume. Un revêtement d'épaisseur de 0,5 à 2,5 mm selon les dimensions des morceaux de légume est généralement satisfaisant, une épaisseur de 1,2 à 1,5 mm étant préférée.

Ainsi la quantité (en poids) de revêtement ajouté représente de 4 à 15 % du légume, une quantité de 7 à 10 % étant préférée. Ces valeurs sont valables pour un revêtement sec seul ou en combinaison avec une pâte liquide. Lorsqu'une pâte liquide est utilisée, elle représente jusqu'à 10 %, de préférence jusqu'à 5 % en poids.

L'opération d'enrobage est conduite de préférence en continu et la durée de celle-ci est de 5 à 30 sec., selon le type d'équipement utilisé.

3

Les morceaux sont ensuite blanchis à la vapeur sous pression atmosphérique à l'aide d'un blancheur à ruban ou à lit fluidisé ou à l'aide d'autres blancheurs à vapeur conventionnels. Quand le produit est chauffé par la vapeur, la vapeur se condense à sa surface et le condensat est absorbé par le revêtement. De cette façon les pertes en solides peuvent être pratiquement totalement éliminées.

L'opération de blanchiment peut aussi être conduite dans un tunnel à micro-ondes sous pression atmosphérique. Un avantage du traitement par les micro-ondes est la réduction très sensible de la durée de traitement qui résulte du fait que la chaleur est générée à l'intérieur même du produit cependant que d'autres méthodes de chauffage sont basées sur la conduction de la chaleur depuis la surface vers l'intérieur du produit. Le chauffage par micro-ondes en lui-même, cependant, a un effet de déshydratation indésirable. En combinant l'effet des micro-ondes et de la vapeur, les propriétés souhaitées du revêtement mentionnées ci-dessus sont préservées.

La durée du blanchiment doit être suffisante pour donner un produit à activité de la peroxydase négative et cette durée est en général de 1 à 5 min. selon le type d'équipement utilisé et le type et les dimensions de la matière première.

Après blanchiment, le produit est transféré vers un appareil à frire.

Le produit est frit pendant 0,5 à 1,5 min. à 180-200 °C, une température d'environ 185 °C et une durée de 60 à 90 sec. étant préférées.

Durant la friture, la teneur en eau du revêtement diminue, ce qui a pour effet de produire une surface croustillante. Comme le revêtement a une teneur élevée en matière sèche, la durée de friture peut être inférieure à celle nécessaire dans le procédé traditionnel et donner malgré tout un produit avec surface croustillante. Plus la durée de friture est courte, plus l'absorption de graisse est faible, ce qui est de nouveau un avantage du point de vue de la texture.

Après friture, le produit est égoutté et surgelé de manière conventionnelle.

En variante, un produit à l'usage des collectivités peut être refroidi en courant d'air et surgelé directement après blanchiment. Pour la consommation, le produit est frit en grande friture à température d'environ 180 °C pendant environ 3 min. Dans ce cas, environ 1,5 min. sert à la décongélation jusqu'à la température ambiante et environ 1,5 min. à la friture proprement dite.

Le produit congelé, frit, est cependant préféré. Il peut être réchauffé de n'importe quelle manière traditionnelle, par exemple par chauffage en four, dans l'huile, ou par friture à la poêle. Un avantage déterminant du nouveau procédé est que toutes les différentes méthodes de réchauffement conduisent à un produit ayant une surface très croustillante. En plus, le produit est très stable. Il peut être stocké pendant de longues périodes sans perdre son caractère croustillant, alors que le produit préparé de façon conventionnelle devient mou et pâteau rapidement après réchauffage, Si les produits sont gardés chauds, la qualité reste stable et pour cette raison, ils sont très adaptés à la distribution dans les collectivités.

Un autre avantage très important du nouveau procédé est l'augmentation du rendement. Le rendement total dans le procédé conventionnel est normalement de 40 à 65 %, cependant que le rendement total dans le nouveau procédé est 75 à 90 % selon le type de revêtement et les durées de blanchiment et de friture ainsi que les températures. De plus, les pertes en produits aromatiques et nutritifs, notamment en vitamines, sont également réduites.

Après surgélation, le produit congelé est emballé en vrac dans des sacs ou des cartons s'il est destiné à être réemballé par la suite, ou bien il est emballé directement dans des emballages destinés à la consommation, par exemple en cartons ou en sacs en matière plastique.

Les exemples suivants illustrent l'invention. Les pourcentages sont en poids.

## Exemple 1

Des pommes de terre sont lavées, pelées et coupées en bâtonnets pour pommes de terre frites à la française de section 10 mm × 10 mm. 100 kg de bâtonnets ainsi obtenus sont enrobés avec un revêtement comportant 90 % de granules de pommes de rerre et 10 % de farine de blé. Les bâtonnets recouverts sont blanchis à la vapeur pendant 2 min. et ensuite frits pendant 60 sec. à 185 °C. Enfin les bâtonnets sont surgelés à − 30 °C. On obtient 95 kg de bâtonnets congelés. Pour préparation les bâtonnets sont chauffés au four à 225 °C pendant 15 min. Le produit obtenu a une texture de surface stable et croustillante.

## Exemple 2

Des pommes de terre sont traitées comme dans l'exemple 1 jusqu'à l'étape de blanchiment et ensuite refroidies par air et surgelées à − 30 °C. 100 kg de bâtonnets sont utilisés pour l'essai. Le poids de bâtonnets est 120 kg. Pour la préparation, les bâtonnets sont frits à grande friture pendant 3 min. à 185 °C. Le produit obtenu montre une texture de surface stable et croustillante.

## Exemple 3

Des pommes de terre sont lavées, pelées et coupées en dés. 100 kg de dés sont ensuite traités comme indiqué dans l'exemple 1. Le poids des dés congelés est 100 kg. Les dés congelés sont mélangés avec des dés de viande congelés, des dés d'oignon congelés et des épices. Pour la préparation, le mélange est chauffé au four à 225 °C pendant 30 min. Les dés de pommes de terre montrent une texture de surface stable et croustillante.

### Exemple 4

Des carottes sont lavées, pelées et coupées en bâtonnets de section 10 mm × 10 mm. 100 kg de bâtonnets sont enrobés d'un revêtement à base de 70 % de farine de blé et 30 % d'amidon de maïs. Les bâtonnets enrobés sont blanchis à la vapeur pendant 4 min. et ensuite frits pendant 90 sec. à 180 °C. Enfin les bâtonnets sont surgelés à − 30 °C. Le poids des bâtonnets congelés obtenu est 95 kg. Pour la préparation, les bâtonnets sont chauffés au four à 200 °C pendant 20 min. Le produit obtenu a une texture de surface stable et croustillante et une couleur brun doré.

### Exemple 5

100 kg de fleurs de choux-fleurs congelés sont plongés dans une pâte à base de 30 % d'œuf complet, 10 % de poudre de lait, 9 % de sel, 1 % de poivre blanc et 50 % d'eau et sont ensuite enrobés de miettes de flocons de maïs. Les fleurs sont blanchies à la vapeur pendant 2 min. et ensuite frites pendant 90 sec. à 185 °C. Enfin les fleurs sont surgelées à − 30 °C. Le poids de fleurs obtenu est 100 kg. Les fleurs sont mélangées avec des pommes de terre frites à la française, des petites carottes et des rondelles d'oignons, tous ces légumes étant enrobés et surgelés selon l'invention. Le mélange de légumes est chauffé dans un four à 225 °C pendant 15 min. Tous les différents légumes montrent une texture de surface stable et croustillante.

### Exemple 6

Pour comparaison, des bâtonnets de carottes sont traités :
1. selon le procédé traditionnel consistant à blanchir pendant 6 min. à 80 °C dans l'eau, tremper dans une solution à 1,75 % de glucose pendant 1 min. à 85 °C, et frire 2 min. à 180 °C.
2. selon le procédé de l'Exemple 1.
3. selon le procédé de l'Exemple 5, sauf que l'on utilise de la matière première fraîche et un mélange de 90 % de granules de pommes de terre/10 % de farine de blé comme revêtement, la pâte à frire étant comme dans l'exemple 5.

Les valeurs des rendements obtenus sont données dans le tableau I ci-dessous pour chaque essai, cependant que le tableau II ci-dessous indique la teneur en vitamines C, la teneur en matières sèches et l'évaluation organoleptique.

### Tableau I

| Essai N° | Matière première utilisée Kg | Poids de produit après application de la pâte à frire Kg | Poids de produit après application du revêtement sec Kg | Poids de produit après blanchiment Kg | Poids de produit après trempe Kg | Poids de produit après friture Kg | Poids de produit après congé-lation Kg |
|---|---|---|---|---|---|---|---|
| 1. | 100 | — | — | 88,2 | 86,6 | 44,1 | 43,0 |
| 2. | 100 | — | 108,6 | 117,9 | — | 75,7 | 73,5 |
| 3. | 100 | 103,0 | 110,2 | 118,2 | — | 83,9 | 81,4 |

### Tableau II

| Essai N° | Teneur en vitamine C du produit final après congélation (mg/100 g) | Teneur en matière sèche du produit final après congélation en pourcentage | Evaluation organoleptique *) Texture de surface | Saveur |
|---|---|---|---|---|
| 1. | 7 | 25,6 | 3,8 | 5,2 |
| 2. | 10 | 37,6 | 7,2 | 6,2 |
| 3. | 12 | 37,8 | 6,2 | 6,6 |

*) Echelle à 8 points ; 8 excellent ; 5 tout juste acceptable ; 1 mauvais.

## Exemple 7

Pour comparaison, des bâtonnets de pommes de terre sont traités :

1. Selon un procédé connu comprenant le blanchiment dans l'eau pendant 10 min. à 75 °C, la trempe des morceaux de pommes de terre dans une solution contenant 1 % de dextrose, 1 % de pyrophosphate acide de sodium et 6,5 % d'Amylomaize VII (qui est un amidon non-gélatinisé non-modifié à haute teneur en amylose provenant de l'American Maize Products company) pendant 26 sec. à 75 °C, agitation des morceaux pour enlever l'excès de solution et friture à grande friture pendant 1,5 min. à 177 °C.

2. Selon le procédé conventionnel indiqué sous le chiffre 1 de l'Exemple 6.

3. Selon le procédé de l'Exemple 1.

4. Selon le procédé indiqué sous le chiffre 3 de l'exemple 6.

5. Les valeurs de rendement sont données dans le Tableau III ci-dessous pour chaque essai, cependant que le Tableau IV ci-dessous indique la teneur en matière sèche du produit final après congélation et l'évaluation organoleptique.

### Tableau III

| Essai N° | Matière première utilisée Kg | Poids de produit après application de la pâte à frire Kg | Poids de produit après application du revêtement sec Kg | Poids de produit après blanchiment Kg | Poids de produit après trempe Kg | Poids de produit après friture Kg | Poids de produit après congélation Kg |
|---|---|---|---|---|---|---|---|
| 1. | 100 | — | — | 95,2 | 116,2 | 68,6 | 67,4 |
| 2. | 100 | — | — | 95,4 | 93,7 | 62,2 | 61,0 |
| 3. | 100 | — | 108,3 | 117,8 | — | 89,4 | 88,2 |
| 4. | 100 | 99,6 | 108,5 | 118,3 | — | 89,9 | 89,0 |

### Tableau IV

| Essai N° | Pertes en solides durant le blanchiment en % des solides totaux dans les bâtonnets | Teneur en vitamine C du produit final après congélation (mg/100 g) | Teneur en matière sèche après congélation en % | Evaluation organoleptique [*] Texture de surface | Saveur |
|---|---|---|---|---|---|
| 1. | 5,0 | 17 | 37,1 | 5,2 | 7,0 |
| 2. | 3,1 | 17 | 37,6 | 5,2 | 6,8 |
| 3. | 0,1 | 20 | 41,7 | 7,2 | 7,0 |
| 4. | 0,1 | 20 | 42,4 | 7,4 | 7,0 |

[*] Echelle à 8 points ; 8 excellent ; 5 tout juste acceptable ; 1 mauvais.

## Exemple 8

Différentes matières premières légumineuses sont traitées comme indiqué dans le tableau V ci-dessous. Les légumes sont trempés dans une pâte à frire liquide contenant 31 % d'œuf complet, 6 % de poudre de lait écrémé, 2,4 % de sel, 0,6 % de poivre blanc et 60 % d'eau, puis revêtus d'un mélange de 50 % de farine de blé, 30 % de granules de pommes de terre et 20 % de miettes de flocons de maïs. Les légumes revêtus sont ensuite blanchis à la vapeur pendant 2 min. et frits pendant 90 sec. à 185 °C. Les légumes frits sont alors congelés à − 30 °C. Pour la consommation les légumes congelés sont chauffés dans un four à 225 °C pendant 7 à 15 min. selon les dimensions des morceaux. Tous les légumes réchauffés ont une texture de surface stable et croustillante, une couleur brun doré et une excellente saveur.

# 0 006 455

## Tableau V

| Matière première légumineuse | Traitement |
|---|---|
| Choux de Bruxelles | lavés et débarrassés de leur amertume |
| Céleri | lavé, pelé et coupé en bâtonnets de 10 × 10 mm |
| Aubergine | lavée et coupée en dés de 16 × 16 × 10 mm |
| Champignons | lavés |
| Oignons | lavés, pelés, orientés et coupés en tranches de 5 mm d'épaisseur et séparés en rondelles |
| Panais | lavé, pelé, orienté et coupé en tranches de 6 mm d'épaisseur |
| Betterave rouge | lavée, précuite, 20 minutes, pelée et coupée en bâtonnets de section 10 × 10 mm |
| Rutabaga | lavé, pelé et coupé en dés de 16 × 16 × 10 mm |
| Navet | lavé, pelé et coupé en bâtonnets de section 10 × 10 mm |
| Courge | lavée, orientée et coupée en tranches de 6 mm d'épaisseur |
| Courgette | lavée et coupée en bâtonnets de section 10 × 10 mm |

## Revendications

1. Procédé de préparation de légumes frits, caractérisé par le fait qu'on enrobe les morceaux de légumes, soit en une étape en appliquant une couche sèche d'un produit contenant de l'amidon, soit en deux étapes en traitant d'abord le produit par une pâte liquide et en appliquant ensuite une couche sèche d'un produit contenant de l'amidon, qu'on blanchit les morceaux enrobés à la vapeur et qu'on frit les morceaux enrobés et blanchis à grande friture, ledit produit contenant de l'amidon ayant la propriété d'adhérer aux légumes et d'absorber la vapeur d'eau qui se condense au cours du blanchiment.

2. Procédé selon la revendication 1, dans lequel les légumes sont des morceaux crus ou congelés de pommes de terre, carottes, céleris, panais, aubergines, oignons, choux-fleurs, courges et choux de Bruxelles.

3. Procédé selon la revendication 1, dans lequel le produit sec contenant de l'amidon comprend en poids 50 à 90 % de granules de pommes de terre et 10 à 50 % de farine de blé.

4. Procédé selon la revendication 1, dans lequel le produit sec contenant de l'amidon comprend en poids 50 % de miettes de flocons de maïs et 50 % de farine de blé.

5. Procédé selon la revendication 1, dans lequel le produit sec contenant de l'amidon comprend en poids 20 % de miettes de flocons de maïs, 50 % de farine de blé et 30 % de granules de pommes de terre.

6. Procédé selon la revendication 1, dans lequel la quantité de revêtement sec ajouté représente 4 à 15 % et de préférence 7 à 10 % en poids des légumes traités.

7. Procédé selon la revendication 1, dans lequel on effectue le traitement en deux étapes, la pâte liquide ajoutée représentant jusqu'à 10 % et de préférence jusqu'à 5 % en poids des légumes traités.

8. Procédé selon la revendication 1, dans lequel on blanchit les morceaux de légumes enrobés à la vapeur à la pression atmosphérique pendant 1 à 5 min.

9. Procédé selon la revendication 8, dans lequel on blanchit les morceaux de légumes enrobés dans un tunnel micro-ondes en atmosphère vapeur.

10. Procédé selon la revendication 1, dans lequel on frit les morceaux de légumes enrobés et blanchis à grande friture pendant 0,5 à 3 min. à 180-200 °C et de préférence pendant 60 à 90 sec. à 185 °C.

11. Procédé selon la revendication 1, dans lequel on égoutte et on congèle les morceaux de légumes frits.

12. Produit à base de légumes frits obtenus par la mise en œuvre du procédé selon l'une des revendications 1 à 11.

## Claims

1. A process for the preparation of fried vegetables which comprises : coating pieces of the vegetables either in one step with a starch-containing product in dry state or in two steps with a fluid batter and then with a starch-containing product as defined above ; blanching the coated pieces with steam and then deep fat frying the coated and blanched pieces, said starch-containing product being able to adhere to the vegetable and to absorb steam condensing during blanching.

2. A process according to claim 1 in which the vegetables are raw or frozen pieces of potato, carrot, celery, parsnip, eggplant, onion, cauliflower, squash and brussels sprout.

3. A process according to claim 1, in which the starch-containing product is a mixture comprising by weight 50-90 % potato granules and 10-50 % wheat flour.

4. A process according to claim 1, in which the starch-containing product is a mixture comprising by weight about 50 % corn flake crumbs and about 50 % wheat flour.

5. A process according to claim 1, in which the starch-containing product is a mixture comprising by weight about 20 % corn flake crumbs, about 50 % wheat flour and about 30 % potato granules.

6. A process according to claim 1, which the amount of coating added represents 4 to 15 % and preferably 7 to 10 % by weight of the vegetables treated.

7. A process according to claim 1, in which the batter added represents up to 10 % by weight and preferably up to 5 % by weight of the vegetables treated.

8. A process according to claim 1, in which the coated pieces of vegetables are blanched in steam for 1 to 5 minutes under atmospheric pressure.

9. A process according to claim 8, in which the coated vegetable pieces are blanched in a microwave tunnel in an atmosphere of steam.

10. A process according to claim 1, in which the coated and blanched vegetable pieces are deep fat fried for 0.5 to 3 min. at 180-200 °C, and preferably for 60 to 90 sec. at 185 °C.

11. A process according to claim 1, in which the fried vegetable pieces are drained and frozen.

12. A fried vegetable product obtained by the process according to anyone of claims 1 to 11.


**Ansprüche**

1. Verfahren zur Herstellung fritierter Gemüse, dadurch gekennzeichnet, daß man das stückförmige Gemüse entweder in einer Stufe durch Aufbringen einer trockenen Schicht eines stärkehaltigen Produkts oder in zwei Stufen durch Behandeln mit einer flüssigen Masse und anschließendes Aufbringen einer trockenen Schicht eines stärkehaltigen Produkts einhüllt, daß man die eingehüllten Stücke mit Wasserdampf blanchiert und daß man die eingehüllten und blanchierten Stücke fritiert, wobei das stärkehaltige Produkt die Eigenschaft besitzt, an den Gemüsen zu haften und den während der Blanchierung kondensierenden Wasserdampf zu absorbieren.

2. Verfahren nach Anspruch 1, bei welchem die Gemüse aus rohen oder gefrorenen Kartoffel-, Karotten-, Sellerie-, Pastinake-, Auberginen-, Zwiebel-, Blumenkohl-, Kürbis- und Rosenkohlstücken bestehen.

3. Verfahren nach Anspruch 1, bei welchem das trockene stärkehaltige Produkt 50 bis 90 Gew.-% Kartoffelkörner und 10 bis 50 Gew:-% Weizenmehl enthält.

4. Verfahren nach Anspruch 1, bei welchem das trockene stärkehaltige Produkt 50 Gew.-% Maisflocken und 50 Gew.-% Weizenmehl enthält.

5. Verfahren nach Anspruch 1, bei welchem das trockene stärkehaltige Produkt 20 Gew.-% Maisflocken, 50 Gew.-% Weizenmehl und 30 Gew.-% Kartoffelkörner enthält.

6. Verfahren nach Anspruch 1, bei welchem die trockene aufgebrachte Umhüllung 4 bis 15 Gew.-% und vorzugsweise 7 bis 10 Gew.-% der behandelten Gemüse beträgt.

7. Verfahren nach Anspruch 1, bei welchem die Behandlung in zwei Stufen durchgeführt wird und die hinzugefügte flüssige Masse bis zu 10 Gew.-% und vorzugsweise bis zu 5 Gew.-% der behandelten Gemüse beträgt.

8. Verfahren nach Anspruch 1, bei welchem die eingehüllten Gemüsestücke mit Wasserdampf bei Atmosphärendruck 1 bis 5 min blanchiert werden.

9. Verfahren nach Anspruch 8, bei welchem die eingehüllten Gemüsestücke in einem Mikrowellentunnel in Wasserdampfatmosphäre blanchiert werden.

10. Verfahren nach Anspruch 1, bei welchem die eingehüllten und blanchierten Gemüsestücke während 0,5 bis 3 min bei 180 bis 200 °C und vorzugsweise während 60 bis 90 s bei 185 °C fritiert werden.

11. Verfahren nach Anspruch 1, bei welchem die fritierten Gemüsestücke abtropfen gelassen und gefroren werden.

12. Produkt auf der Basis fritierter Gemüse, welches bei der Durchführung des Verfahrens nach einem der Ansprüche 1 bis 11 erhalten wird.